# EUROPÄISCHE PATENTANMELDUNG

(11) **EP 4 383 470 A1**
(43) Veröffentlichungstag der Anmeldung: **12.06.2024**
(21) Anmeldenummer: 22211650.1
(22) Anmeldetag: 06.12.2022
(51) Int. Cl.: H01R 13/405, B29C 45/14, H01R 43/24

(54) **VERFAHREN ZUR HERSTELLUNG EINES ELEKTRISCHEN VERBINDUNGSTEILS UND ELEKTRISCHES VERBINDUNGSTEIL**

(71) Anmelder: PEX Automotive GmbH, 72800 Eningen unter Achalm (DE)
(72) Erfinder: Bencsik, Miklós, 2030 Érd (HU)
(74) Vertreter: Patentanwälte Ruff, Wilhelm, Beier, Dauster & Partner mbB

(57) **Zusammenfassung**

Bei einem Verfahren zur Herstellung eines elektrischen Verbindungsteils weist das elektrische Verbindungsteil ein Metallteil als Kontaktelement und ein Gehäuse aus Kunststoff auf, das das Kontaktelement zumindest teilweise umschließt. Bei dem Verfahren erfolgt ein Umschließen des Kontaktelements mit dem Kunststoff durch Umspritzen, und ein induktives Erwärmen des Kontaktelements derart, dass sich das Metall des Kontaktelements erwärmt. Dadurch schmilzt ein an das Kontaktelement angrenzender Bereich des Gehäuses derart, dass der geschmolzene Kunststoff des Gehäuses das Kontaktelement dichter umschließt.

## Beschreibung

### ANWENDUNGSGEBIET UND STAND DER TECHNIK

Die Erfindung bezieht sich auf ein Verfahren zur Herstellung eines elektrischen Verbindungsteils und auf ein elektrisches Verbindungsteil, das mit solch einem Verfahren hergestellt ist. Das elektrische Verbindungsteil weist ein Metallteil als Kontaktelement und ein Gehäuse aus Kunststoff auf, das das Kontaktelement zumindest teilweise umschließt. Bei dem Verfahren wird das Kontaktelement mit dem Kunststoff durch Umspritzen umschlossen.

Bei elektrischen Verbindungsteilen, wie beispielsweise Steckern oder Stromschienen, weist das Gehäuse nach dem Umspritzen einen Durchgangskanal mit einem größeren lichten Durchmesser als der Außendurchmesser des Metallteils bzw. des Kontaktelements auf. Dies ist bedingt durch die sogenannte Schwindung des Gehäuses, die mit dem Abkühlen des fertig gespritzten Gehäuses einsetzt und das Volumen bzw. die Größe dabei abnehmen. Durch die dadurch hervorgerufenen Spalte bzw. Hohlräume ist das Gehäuse nicht gegenüber seiner Umgebung abgedichtet, so dass beispielsweise das Eindringen von Flüssigkeiten nicht ausreichend verhindert wird. Das Eindringen von Flüssigkeiten kann jedoch nicht nur Schäden an dem elektrischen Verbindungsteil selbst hervorrufen, sondern auch an damit verbundenen Geräten, wie zum Beispiel durch einen Kurzschluss, und an Personen. Zur Erhöhung der Sicherheit und des Schutzes über den Produktlebenszyklus, der über zehn Jahre sein kann, weisen elektrische Verbindungsteile deshalb hohe Anforderungen an deren Dichtheit auf. Dies gilt insbesondere bei elektrischen Verbindungsteilen für den Außenbereich bzw. bei elektrischen Verbindungsteilen, die den Umweltbedingungen ausgesetzt sind.

Die EP 1 965 467 A1 offenbart eine Hochstrom-Steckvorrichtung mit einem Hochstrom-Stecckontakt, wobei der Hochstrom-Steckkontakt von einem Schutzgehäuse umgeben ist. Das Schutzgehäuse ist als Umspritzung aus einem elektrisch isolierenden Material ausgebildet. Dabei ist das Schutzgehäuse durch ein Verschmelzen des Umspritzungsmaterials mit einem Isolierungsmaterial einer Leitung des Hochstrom-Steckkontakts gegenüber seiner Umgebung abgedichtet.

Aus der WO 1997/18610 A1 ist es bekannt, zur Herstellung einer Kabeldurchführung zunächst Anschlusskabel durch zylindrische Durchführungen eines in einem Gehäuse angeordneten Formkörper zu führen und mit Crimpkontakten entsprechender Kontaktteile zu verbinden. Der Formkörper wird von einem Fertigungswerkzeug umklammert und anschließend in einem Ofen erhitzt, wobei sich der Formkörper aufgrund des einwirkenden Drucks entsprechend verformen lässt, so dass sich die Grenzflächen zwischen einer Kabelisolation und dem Formkörper formschlüssig umfassen und dabei miteinander verschmelzen.

### AUFGABE UND LÖSUNG

Der Erfindung liegt die Aufgabe zugrunde, ein eingangs genanntes Verfahren sowie ein eingangs genanntes damit hergestelltes elektrisches Verbindungsteil zu schaffen, die gegenüber dem Stand der Technik Vorteile insbesondere hinsichtlich Sicherheit, Dichtheit, Herstellungsaufwand, Kosten und/oder Rüstzeit bieten.

Die Erfindung löst dieses Problem durch ein Verfahren mit den Merkmalen des Anspruchs 1 sowie durch ein elektrisches Verbindungsteil mit den Merkmalen des Anspruchs 6. Vorteilhafte sowie bevorzugte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind. Dabei werden manche der Merkmale nur für das elektrische Verbindungsteil oder nur für das Verfahren zu seiner Herstellung genannt. Sie sollen jedoch unabhängig davon sowohl für ein Verbindungsteil als auch für ein Verfahren zu seiner Herstellung selbständig und unabhängig voneinander gelten können.

Bei dem erfindungsgemäßen Verfahren zur Herstellung eines elektrischen Verbindungsteils wird nach dem Umspritzen des Kontaktelements mit dem Kunststoff ein weiterer, zweiter Schritt durchgeführt. Dabei wird das Kontaktelement induktiv derart erwärmt, dass sich dadurch das Metall des Kontaktelements erwärmt und dadurch ein an das Kontaktelement angrenzender Bereich des Gehäuses derart schmilzt, dass der geschmolzene Kunststoff des Gehäuses das Kontaktelement dichter umschließt. Der Kunststoff ist vorteilhaft thermoplastisch. In anderen Worten: Durch das Erwärmen des Kontaktelements und damit verbunden durch das Aufschmelzen des an das Kontaktelement angrenzenden Kunststoffs des Gehäuses werden vorhandene Spalte bzw. Hohlräume mit dem aufgeschmolzenen Kunststoffmaterial ausgefüllt und geschlossen. Das aufgeschmolzene Kunststoffmaterial ist vorzugsweise fließfähig. Das Gehäuse, insbesondere im Bereich des Kontaktelements, wird dadurch auf eine einfache Art und Weise in einem Schritt gegenüber seiner Umgebung abgedichtet. Neben der Dichtheit wird vorzugsweise auch die Haftung des Gehäuses gegenüber dem Metallteil bzw. dem Kontaktelement verbessert.

Durch das induktive, insbesondere kontaktlose, Erwärmen des Kontaktelements ist es möglich, unabhängig von der Form und der Größe des elektrischen Verbindungsteils, insbesondere dessen einzelner Bauteile, unterschiedliche elektrische Verbindungsteile nacheinander im Wesentlichen ohne Rüstzeiten einer Induktionsvorrichtung herstellen zu können.

Der Kunststoff ist vorzugsweise thermoplastisch und kann ein Thermoplast oder ein thermoplastisches Elastomer sein. Übliche Materialien für elektrische Verbindungsteile bieten sich an, vorzugsweise PA oder PBT, sind aber nicht auf diese beschränkt.

Die Durchführung des zweiten Schritts, des induktiven Erwärmens, ist auch bei einem nicht umspritzten Gehäuse denkbar. Zum Beispiel könnte dies bei einem Gehäuse aus Kunststoff durchgeführt werden, das in Schalenbauweise, insbesondere mit zwei miteinander verrastbaren oder verbundenen Schalenelementen, ausgeführt ist.

In einer Weiterbildung der Erfindung wird das elektrische Verbindungsteil zum induktiven Erwärmen des Kontaktelements in eine Induktionsspule eingeführt. Dies stellt eine konstruktiv und funktionell vorteilhafte und einfache Realisierung des Verfahrens dar. Denn die Induktionsspule erzeugt ein starkes Magnetfeld, wobei die Induktionsspule das elektrische Verbindungsteil radial vollumfänglich umgibt. Dadurch kann ein möglichst gleichmäßiges Erwärmen des Kontaktelements und damit auch des daran angrenzenden Kunststoffs erreicht werden. Beim Einführen des elektrischen Verbindungsteils in die Induktionsspule ist vorzugsweise eine Längsachse des elektrischen Verbindungsteils nach oben oder nach unten ausgerichtet. Die Längsachse des elektrischen Verbindungsteils oder des Kontaktelements kann in einem Winkel von 0° bis 30° zu einer Vertikalen ausgerichtet sein, vorzugsweise von 0° bis 10°. In alternativen Ausführungen wird das elektrische Verbindungsteil auf eine Induktionsplatte oder dergleichen aufgelegt.

In einer Weiterbildung der Erfindung wird während des induktiven Erwärmens des Kontaktelements zusätzlich ein Druck von außen auf das Gehäuse ausgeübt, alternativ direkt danach. Dies kann zu einer weiter verbesserten Dichtheit und Haftung des Gehäuses gegenüber dem Kontaktelement führen. Der Druck von außen auf das Gehäuse wird vorzugsweise bis zum Aushärten des aufgeschmolzenen Kunststoffs aufrechterhalten. Zur Ausübung des Drucks wird vorzugsweise eine zangenartige Druckvorrichtung eingesetzt. Vorteilhaft ist vorliegend das Gehäuse aus einem thermoplastischen Elastomer und/oder befindet sich in einem thermoelastischen Zustand, so dass sich das Gehäuse unter Ausübung des Drucks in seiner äußeren Gestalt bzw. Form zwar verändert, seine Ursprungsform aber beibehält und in diese unter Wegnahme des Drucks zurückkehrt. Der Druck soll vor allem im Innenbereich des Gehäuses, also am Kontaktelement, wirken.

In einer Weiterbildung der Erfindung dauert der Verfahrensschritt des induktiven Erwärmens von 1 s bis 60 s, vorzugsweise 5 s bis 20 s. Das induktive Erwärmen erfolgt vorzugsweise mit einer Frequenz von 500 Hz bis 25 kHz. Dabei wird vorzugsweise der an das Kontaktelement angrenzende Bereich des Gehäuses auf eine Temperatur von 100°C bis 250°C erhitzt. Die Verfahrensparameter hängen insbesondere von den verwendeten Materialien sowohl des Gehäuses als auch des Kontaktelements bzw. des Metallteils ab.

In einer Weiterbildung der Erfindung wird ausgehend von einer Außenseite des Kontaktelements eine Dicke von 1 mm bis 5 mm des angrenzenden Kunststoffs des Gehäuses erwärmt, insbesondere erweicht bzw. aufgeschmolzen. Dies stellt eine funktionell vorteilhafte Realisierung des Verfahrens dar. Dadurch wird einerseits ausreichend Kunststoffmaterial aufgeschmolzen, um die Spalte bzw. die Hohlräume, insbesondere im Bereich des Kontaktelements, auszufüllen und das Gehäuse in diesem Bereich abzudichten. Andererseits bleibt dadurch die Außenseite bzw. die äußere Gestalt des Gehäuses unverändert. Dabei beträgt vorzugsweise an einer Außenseite des Gehäuses die Temperatur nicht mehr als 30°C oder nicht mehr als 50°C.

Das erfindungsgemäße elektrische Verbindungsteil ist mit dem erfindungsgemäßen Verfahren hergestellt. Zur Herstellung des elektrischen Verbindungsteils wird vorzugsweise das Kontaktelement in ein Spitzgießwerkzeug gelegt und das Gehäuse um das Kontaktelement gespritzt. Bei dem Kunststoff kann es sich um einen thermoplastischen Kunststoff handeln, wie zum Beispiel um Polyamide (PA) oder um Polybutylenterephthalate (PBT). Der Kunststoff kann auch ein thermoplastisches Elastomer sein. Alternativ zu einem gespritzten Gehäuse kann das Gehäuse auch in Schalenbauweise, insbesondere mit zwei miteinander verrastbaren Schalenelementen, ausgeführt sein.

In einer Weiterbildung der Erfindung ist das Kontaktelement eisenhaltig. In einer alternativen Ausführung weist das Kontaktelement eine Messing- oder Kupferlegierung mit einer eisenhaltigen bzw. ferritischen Beschichtung oder ohne Beschichtung auf. In weiterer Alternative kann das Metall des Kontaktelements Aluminium oder Messing sein.

In einer Weiterbildung der Erfindung weist das Gehäuse thermoplastischen Kunststoff auf. Das Gehäuse ist vorzugsweise zu mindestens 50% aus thermoplastischem Kunststoff, insbesondere vollständig aus thermoplastischem Kunststoff.

In einer Weiterbildung der Erfindung weist das elektrische Verbindungsteil ein Kabel auf, wobei das Kontaktelement als Steckverbinder mit dem Kabel verbunden ist und das Gehäuse die Verbindung zwischen dem Kabel und dem Steckverbinder umschließt. Der Steckverbinder und das Kabel stehen vorzugsweise aus dem Gehäuse heraus. Der Steckverbinder ist vorzugsweise endseitig mit dem Kabel verbunden. Der Steckverbinder ist in einer an sich bekannten Weise ausgeführt, z.B. als Buchsenkontakt oder als Stiftkontakt, und zur elektrischen Kontaktierung durch Stecken ausgebildet. Zur Herstellung des elektrischen Verbindungsteils wird zunächst das Kabel mit dem Steckverbinder verbunden. Anschließend wird das Kabel mit dem Steckverbinder vorzugsweise in ein Spitzgießwerkzeug gelegt und das Gehäuse um die Verbindung zwischen dem Kabel und dem Steckverbinder gespritzt.

Das Kabel kann ein massiver Leiter sein, alternativ als Litze ausgebildet, und anwendungsspezifisch ausgebildet sein, zum Beispiel als eine umspritzte Stromschiene oder dergleichen. Vorzugsweise weist das Kabel einen Isoliermantel aus einem Isoliermaterial auf, der einen den Steckverbinder kontaktierenden, elektrischen Leiter umschließt. Durch das induktive Erwärmen des Steckverbinders kann es im Bereich des Steckverbinders zusätzlich zu einem Verschmelzen des Kunststoffmaterials des Gehäuses mit dem Isoliermaterial des Isoliermantels kommen. Dies stellt eine weitere Abdichtung des Gehäuses gegenüber seiner Umgebung dar und somit auch gegen das Durchkommen von Feuchtigkeit durch das elektrische Verbindungsteil bzw. durch das Gehäuse. In einer alternativen Ausführung weist ein elektrisches Verbindungsteil mehr als einen Steckverbinder auf, die in einem gemeinsamen Gehäuse aufgenommen sind.

In einer Ausgestaltung der Erfindung erstreckt sich das Gehäuse axial längs zumindest teilweise sowohl über den Steckverbinder als auch über das Kabel hinweg. Dies stellt eine konstruktiv und funktionell vorteilhafte Realisierung dar. Das Gehäuse erstreckt sich dabei vorzugsweise axial längs größer gleich 5 mm über den Steckverbinder und größer gleich 5 mm über das Kabel hinweg.

In weiterer Ausgestaltung der Erfindung ist die Verbindung zwischen dem Kabel und dem Steckverbinder gecrimpt. Dies stellt eine konstruktiv und funktionell vorteilhafte Realisierung der Verbindung zwischen dem Kabel und dem Steckverbinder dar. In alternativen Ausführungen ist die Verbindung zwischen dem Kabel und dem Steckverbinder gelötet oder geschweißt.

In einer Weiterbildung der Erfindung ist das Kontaktelement als Stromschiene aus Metall ausgebildet, wobei vorzugsweise die Stromschiene beidseitig aus dem Gehäuse heraussteht. Die umspritzte Stromschiene weist zur elektrischen Kontaktierung vorzugsweise Anschraubpunkte auf.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine schematische Seitenansicht einer ersten Ausführungsform eines elektrischen Verbindungsteils, wobei ein Kabel teilweise geschnitten dargestellt ist,
- Fig. 2: das elektrische Verbindungsteil von Fig. 1, wobei ein Gehäuse geschnitten dargestellt ist,
- Fig. 3: das elektrische Verbindungsteil von Fig. 1 vor dem Einführen in eine Induktionsspule zum induktiven Erwärmen,
- Fig. 4: das elektrische Verbindungsteil von Fig. 1 in der Induktionsspule während des erfindungsgemäßen induktiven Erwärmens,
- Fig. 5: eine schematische Seitenansicht eines erfindungsgemäßen elektrischen Verbindungsteils nach dem Anschmelzen, wobei das Gehäuse geschnitten dargestellt ist,
- Fig. 6: eine schematische Seitenansicht einer zweiten Ausführungsform eines das elektrischen Verbindungsteils unmittelbar nach dem erfindungsgemäßen induktiven Erwärmen, wobei zusätzlich ein Druck von außen auf das Gehäuse ausgeübt wird,
- Fig. 7A: eine schematische Seitenansicht einer dritten Ausführungsform eines elektrischen Verbindungsteils, wobei ein Kontaktelement als Stromschiene ausgebildet ist,
- Fig. 7B: das elektrische Verbindungsteil von Fig. 7A, wobei ein Gehäuse geschnitten dargestellt ist, und
- Fig. 7C: eine schematische Seitenansicht eines erfindungsgemäßen elektrischen Verbindungsteils nach dem Anschmelzen, wobei das Gehäuse geschnitten dargestellt ist.

### DETAILLIERTE BESCHREIBUNG DER AUSFÜHRUNGSBEISPIELE

Wie in den Figuren anhand drei exemplarischen Ausführungen veranschaulicht ist, weist das erfindungsgemäße elektrische Verbindungsteil 1, 1', 1" ein Metallteil 3 und ein Gehäuse 4 auf. Das Metallteil 3 ist als Kontaktelement 18 ausgeführt und wird im Folgenden als solches bezeichnet.

Das Gehäuse 4, 4' ist ein Spritzgussteil aus einem vorzugsweise thermoplastischen Kunststoff, wie zum Beispiel aus PA oder PBT, und umschließt das Kontaktelement 18 zumindest teilweise. Dabei wird das Kontaktelement 18 direkt umspritzt. In einer alternativen Ausführung kann das Gehäuse 4, 4' in Schalenbauweise, insbesondere mit zwei miteinander verrastbaren Schalenelementen, ausgeführt sein. Der Kunststoff kann auch ein thermoplastisches Elastomer sein.

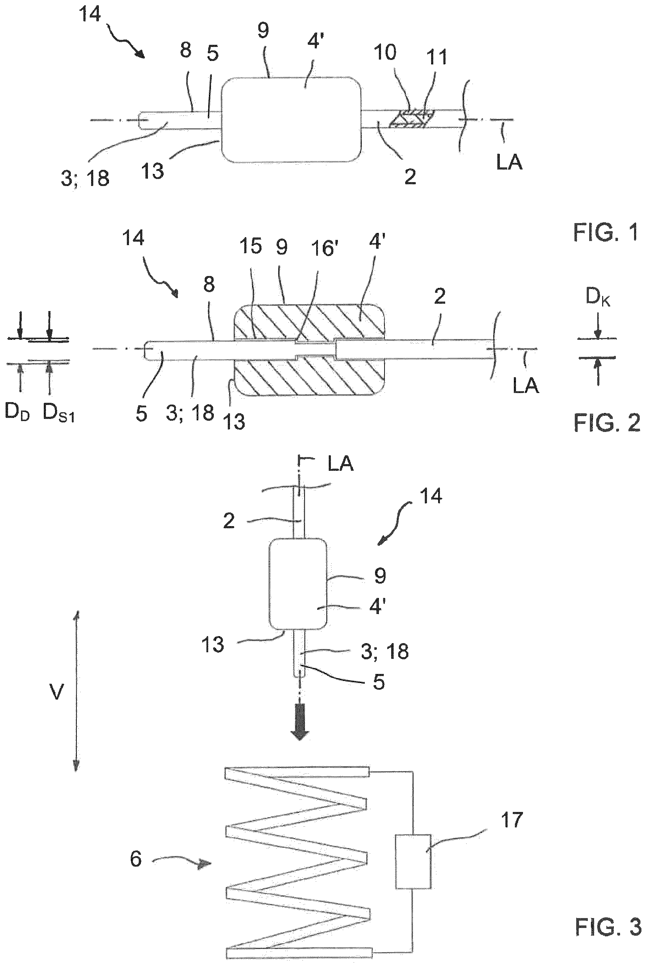

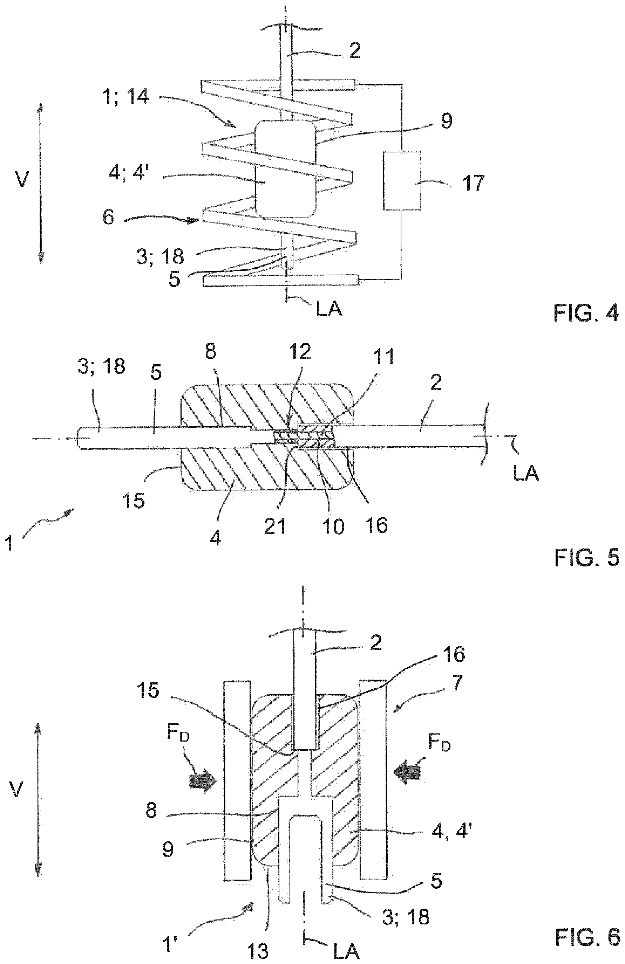

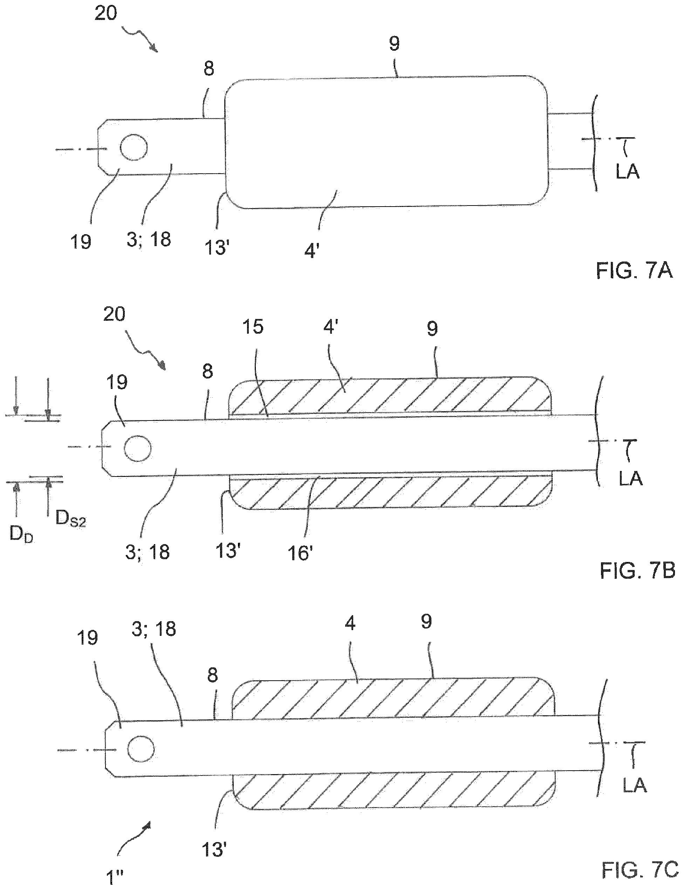

Das Kontaktelement 18 ist zur elektrischen Kontaktierung ausgebildet und ist anwendungsspezifisch in einer an sich bekannten Weise ausgeführt. In einer ersten und zweiten Ausführungsform des elektrischen Verbindungsteils 1, 1' ist das Kontaktelement 18, gemäß den Fig. 1 bis 6, ein Steckverbinder 5, 5'. Der Steckverbinder 5, 5' kann z.B. als Stiftkontakt, wie in der Fig. 5 dargestellt ist, oder als Buchsenkontakt, wie in der Fig. 6 dargestellt ist, und zur elektrischen Kontaktierung durch Stecken ausgebildet sein. In einer dritten Ausführungsform des elektrischen Verbindungsteils 1" ist das Kontaktelement 18, gemäß den Fig. 7A bis 7C, eine Stromschiene 19 aus Metall, wobei vorzugsweise die Stromschiene 19 beidseitig aus dem Gehäuse 4, 4' heraussteht, wie in den Fig. 7A bis 7C dargestellt ist.

In vorteilhaften Ausführungsformen ist das Kontaktelement 18 eisenhaltig oder weist eine Kupferlegierung mit einer eisenhaltigen Beschichtung auf. So ist eine induktive Erwärmung möglich. Alternativ weist das Kontaktelement 18 (Metallteil) eine Kupferlegierung ohne eisenhaltige Beschichtung auf. In weiterer Alternative kann das Metall des Kontaktelements 18 Aluminium oder Messing sein.

In einer konstruktiv vorteilhaften Ausführung weist das Gehäuse 4, 4' thermoplastischen Kunststoff auf. Das Gehäuse 4, 4' ist vorzugsweise zu mindestens 50% aus thermoplastischem Kunststoff, insbesondere vollständig aus thermoplastischem Kunststoff.

In vorteilhaften Ausführungsformen weist das elektrische Verbindungsteil 1, 1' ein Kabel 2 auf, wobei das Kontaktelement 18 als Steckverbinder 5, 5' mit dem Kabel 2 verbunden ist, wie in den Fig. 1 bis 6 dargestellt ist. Das Gehäuse 4, 4' umschließt die Verbindung zwischen dem Kabel 2 und dem Steckverbinder 5, 5'. Dabei wird die Verbindung zwischen dem Kabel 2 und dem Steckverbinder 5, 5' direkt umspritzt.

Bei Beispielen gemäß der ersten und zweiten Ausführungsform weist das Kabel 2 einen von einem Isoliermantel 10 umschlossenen, das Metallteil 3 kontaktierenden elektrischen Leiter 11 auf, wie insbesondere in der Fig. 5 dargestellt ist. Das Metallteil 3 bzw. das Kontaktelement 18 ist als Steckverbinder 5, 5' ausgeführt und wird im Folgenden als solcher bezeichnet.

Zur Herstellung des elektrischen Verbindungsteils 1, 1' wird zunächst das Kabel 2 mit dem Steckverbinder 5, 5' verbunden. Anschließend wird das Kabel 2 mit dem Steckverbinder 5, 5' vorzugsweise in ein Spitzgießwerkzeug gelegt und das Gehäuse 4' um die Verbindung zwischen dem Kabel 2 und dem Steckverbinder 5, 5' gespritzt.

In den gezeigten Beispielen gemäß den Fig. 1 bis 6 ist der Steckverbinder 5, 5' mit dem Kabel 2 endseitig verbunden. In einer nicht dargestellten Ausführung weist das elektrische Verbindungsteil 1, 1' mehr als einen Steckverbinder 5, 5' auf, die in einem gemeinsamen Gehäuse 4 aufgenommen sind.

Elektrische Verbindungsteile 14, 20 mit einem umspritzten Gehäuse 4' weisen aufgrund der Schwindung des Gehäuses 4' einen Durchgangskanal 15 mit einem größeren lichten Durchmesser D_{D} als der Außendurchmesser D_{S2} der Stromschiene 19 bzw. als der Außendurchmesser D_{S1} des Steckverbinders 5, 5' und der Außendurchmesser D_{K} des Kabels 2 auf, wie in der Fig. 7B bzw. 2 ersichtlich ist. Dadurch bildet sich zwischen dem Gehäuse 4' und der Stromschiene 19 bzw. dem Kabel 2 und dem Steckverbinder 5' ein Spalt 16'.

Das erfindungsgemäße elektrische Verbindungsteil 1, 1', 1" weist in der ersten und zweiten Ausführungsform zumindest im Bereich der Verbindung zwischen dem Kabel 2 und dem Steckverbinder 5, 5' sowie in der dritten Ausführungsform im Bereich der Stromschiene 19 keinen derartigen Spalt 16' auf, wie in den Fig. 5, 6 und 7C ersichtlich ist.

In den gezeigten Beispielen der ersten und zweiten Ausführungsform ist der Steckverbinder 5, 5' axial längs ausgehend von einer Stirnseite 21 des Isoliermantels 10 bis zu einer Stirnseite 13 des Gehäuses 4 hin vollumfänglich bzw. spaltfrei von dem Kunststoffmaterial des Gehäuses 4 umschlossen. Vorliegend weist elektrische Verbindungsteil 1, 1' lediglich zwischen dem Kabel 2 und dem Gehäuse 4 einen Spalt 16 auf, wie in den Fig. 5 und 6 dargestellt ist.

In einer nicht dargestellten Ausführung ist in der ersten und zweiten Ausführungsform zusätzlich im Bereich des Steckverbinders 5, 5' das Kunststoffmaterial des Gehäuses 4 zumindest teilweise mit dem Isoliermantel 10 des Kabels 2 verschmolzen. Dies ist eine zusätzliche Abdichtung des Gehäuses 4 bzw. seines Inneren gegenüber seiner Umgebung.

Bei der dritten Ausführungsform ist in dem gezeigten Beispiel das elektrische Verbindungsteil 1" zwischen dem Gehäuse 4' und der Stromschiene 19 über eine gesamte axiale Länge des Gehäuses 4 spaltfrei. In einer nicht dargestellten Ausführung ist der Spalt 16' zwischen dem Gehäuse 4' und der Stromschiene 19 nur partiell geschlossen, beispielsweise im Bereich einer in einem Nassbereich liegenden Stirnseite 13' des Gehäuses 4, 4'.

In einer vorteilhaften Realisierung erstreckt sich das Gehäuse 4 axial längs zumindest teilweise sowohl über dem Steckverbinder 5, 5' als auch über das Kabel 2 hinweg, wie in der Fig. 5 dargestellt ist. In den gezeigten Beispielen erstreckt sich das Gehäuse 4 axial längs größer 5 mm über den Steckverbinder 5, 5' und größer 5 mm über das Kabel 2 hinweg.

In einer konstruktiv vorteilhaften Ausführung ist die Verbindung zwischen dem Kabel 2 und dem Steckverbinder 5, 5' gecrimpt. Eine derartige Crimpverbindung 12 ist in der Fig. 5 dargestellt. Dazu ist der Steckverbinder 5, 5' durch plastische Verformung mit dem elektrischen Leiter 11 verbunden. In alternativen Ausführungen kann die Verbindung zwischen dem Kabel 2 und dem Steckverbinder 5, 5' gelötet oder geschweißt sein. In den gezeigten Beispielen ist der Steckverbinder 5, 5' auf der Stirnseite 13 des Gehäuses 4, 4' aus dem Gehäuse 4, 4' herausgeführt.

Bei dem erfindungsgemäßen Verfahren zur Herstellung des elektrischen Verbindungsteils 1, 1', 1" wird zunächst das Kontaktelements 18 mit dem thermoplastischen Kunststoff durch Umspritzen umschlossen. In der ersten und zweiten Ausführungsform wird das Kabel 2 und der Steckverbinder 5, 5' im Bereich der Verbindung umschlossen. Dafür wird zuvor das Kabel 2 endseitig mit dem Steckverbinder 5, 5' verbunden und anschließend in ein Spitzgießwerkzeug gelegt, um das Gehäuse 4' um die Verbindung zwischen dem Kabel 2 und dem Steckverbinder 5, 5' herumzuspritzen. In der dritten Ausführungsform wird die Stromschiene 19 zumindest teilweise umschlossen, wobei die Stromschiene 19 in ein Spitzgießwerkzeug gelegt, um das Gehäuse 4' um Stromschiene 19 herumzuspritzen.

In einer alternativen Ausführung wird das Gehäuse 4' nicht direkt um die Stromschiene 19 bzw. um die Verbindung zwischen dem Kabel 2 und dem Steckverbinder 5, 5' gespritzt, sondern wird in Schalenbauweise, insbesondere mit zwei miteinander verrastbaren Schalenelementen, angebracht.

In einem weiteren, zweiten Schritt wird das Kontaktelement 18 derart induktiv erwärmt, dass sich das Metall des Kontaktelements 18 gleichmäßig erwärmt und dadurch ein an das Kontaktelement 18 angrenzender Bereich des Gehäuses 4 derart schmilzt oder anschmilzt, dass der geschmolzene Kunststoff des Gehäuses 4' das Kontaktelement 18 dichter umschließt. Der Spalt 16' zwischen dem Gehäuse 4' und dem Kontaktelement 18 wird mit dem aufgeschmolzenen Kunststoffmaterial ausgefüllt und geschlossen. Es wird ein gegenüber seiner Umgebung abgedichtetes Gehäuse 4 gebildet. Neben der Dichtheit weist vorliegend das Gehäuse gegenüber dem Kontaktelement 18 eine verbesserte Haftung auf.

In einer vorteilhaften Realisierung wird elektrische Verbindungsteil 1, 1' 1" zum induktiven Erwärmen des Kontaktelements 18 in eine schraubenlinienförmige Induktionsspule 6 eingeführt, wie in den Fig. 3 und 4 dargestellt ist. Dabei ist vorzugsweise eine strichpunktierte Längsachse LA des elektrischen Verbindungsteils 1, 1', 1" nach oben oder nach unten ausgerichtet, insbesondere mit einem Winkel von 0° bis 30° zur Vertikalen V. In dem gezeigten Beispiel ist die Längsachse LA entlang, also mit einem Winkel von 0°, der Vertikalen V ausgerichtet.

Die Induktionsspule 6 ist an einen Hochfrequenz-Generator 17 angeschlossen, wie in den Fig. 3 und 4 ersichtlich ist. Dieser ist ausgebildet wie im Stand der Technik bekannt ist.

In vorteilhaften Ausführungen wird während des induktiven Erwärmens des Kontaktelements 18 oder danach zusätzlich ein Druck F_{D} von außen auf das Gehäuse 4' ausgeübt, wie in der Fig. 6 dargestellt ist. Dieser Druck F_{D} wird vorzugsweise durch eine zangenartige Druckvorrichtung 7 ausgeübt. Dies kann zusätzlich die Dichtheit und die Haftung des Gehäuses 4 gegenüber dem Kontaktelement 18 verbessern. Dabei wird der Druck F_{D} vorzugsweise bis zum Aushärten des aufgeschmolzenen Kunststoffs aufrechterhalten. Dies ist in der Fig. 6 veranschaulicht, welche das elektrische Verbindungsteil 1' unmittelbar nach dem induktiven Erwärmen zeigt, wobei weiterhin der Druck F_{D} von außen auf das Gehäuse 4, 4' ausgeübt wird. Vorteilhaft besteht vorliegend das Gehäuse 4 aus einem thermoplastischen Elastomer und/oder befindet sich in einem thermoelastischen Zustand. So verändert sich das Gehäuse 4, 4' unter Ausübung des Drucks F_{D} in seiner äußeren Gestalt bzw. Form, behält seine Ursprungsform aber bei und kehrt in diese unter Wegnahme des Drucks F_{D} zurück. Der an das Kontaktelement 18 angrenzende Kunststoff des Gehäuses 4 wird durch das induktive Erwärmen des Kontaktelements 18 entweder thermoplastisch, d.h. das Material wird weich und ist nicht mehr formstabil, oder fließfähig, wenn der Bereich der Thermoplastizität überschritten ist.

In einer vorteilhaften Realisierung dauert das induktive Erwärmen von 1 s bis 60 s. Das induktive Erwärmen erfolgt vorzugsweise mit einer Frequenz von 500 Hz bis 25 kHz. Dabei wird vorzugsweise der an das Kontaktelement 18 angrenzende Bereich des Gehäuses 4' auf eine Temperatur von 100°C bis 250°C erhitzt. Die Verfahrensparameter hängen insbesondere von den verwendeten Materialien sowohl des Gehäuses 4' als auch des Kontaktelements 18 sowie von den geometrischen Abmessungen ab.

In einer vorteilhaften Ausführung wird ausgehend von einer Außenseite 8 des Kontaktelements 18 eine Dicke von 1 mm bis 5 mm des angrenzenden Kunststoffs des Gehäuses 4' erwärmt, insbesondere aufgeschmolzen. Dabei beträgt vorzugsweise an einer Außenseite 9 des Gehäuses 4' die Temperatur nicht mehr als 30°C oder nicht mehr als 50°C.

Wie die gezeigten und die weiteren oben erwähnten Ausführungsbeispiele deutlich machen, stellt die Erfindung ein elektrisches Verbindungsteil und ein Verfahren zur Herstellung eines elektrischen Verbindungsteils zur Verfügung, die gegenüber herkömmlichen Vorrichtungen bzw. Verfahren Vorteile insbesondere hinsichtlich Sicherheit, Dichtheit, Herstellungsaufwand, Kosten und/oder Rüstzeit bieten.

## Patentansprüche

1. Verfahren zur Herstellung eines elektrischen Verbindungsteils (1, 1', 1"), wobei das elektrische Verbindungsteil (1, 1', 1") aufweist:
- ein Metallteil (3, 3') als Kontaktelement (18) und
- ein Gehäuse (4, 4') aus Kunststoff, das das Kontaktelement (18) zumindest teilweise umschließt,
wobei das Verfahren die Schritte aufweist:
- Umschließen des Kontaktelements (18) mit dem Kunststoff durch Umspritzen, und
- induktives Erwärmen des Kontaktelements (18) derart, dass sich das Metall des Kontaktelements (18) erwärmt und dadurch ein an das Kontaktelement (18) angrenzender Bereich des Gehäuses (4, 4') derart schmilzt, dass der geschmolzene Kunststoff des Gehäuses (4, 4') das Kontaktelement (18) dichter umschließt.

2. Verfahren nach Anspruch 1, **dadurch gekennzeichnet, dass** das elektrische Verbindungsteil (1, 1', 1") zum induktiven Erwärmen des Kontaktelements (18) in eine Induktionsspule (6) eingeführt wird, wobei vorzugsweise eine Längsachse (LA) des elektrischen Verbindungsteils (1, 1', 1") nach oben oder nach unten ausgerichtet ist, insbesondere mit einem Winkel von 0° bis 30° zur Vertikalen.

3. Verfahren nach Anspruch 1 oder 2, **dadurch gekennzeichnet, dass** während des induktiven Erwärmens des Kontaktelements (18) zusätzlich ein Druck (D) von außen auf das Gehäuse (4, 4') ausgeübt wird, vorzugsweise durch eine zangenartige Druckvorrichtung (7).

4. Verfahren nach einem der vorhergehenden Ansprüche, **dadurch gekennzeichnet, dass** das induktive Erwärmen von 1 s bis 60 s, vorzugsweise von 5 s bis 20 s, dauert.

5. Verfahren nach einem der vorhergehenden Ansprüche, **dadurch gekennzeichnet, dass** ausgehend von einer Außenseite (8) des Kontaktelements (18) eine Dicke von 1 mm bis 5 mm des angrenzenden Kunststoffs des Gehäuses (4, 4') erwärmt wird, wobei vorzugsweise an einer Außenseite (9) des Gehäuses (4, 4') die Temperatur nicht mehr als 30°C oder nicht mehr als 50°C beträgt.

6. Elektrisches Verbindungsteil (1, 1', 1"), das mit einem Verfahren nach einem der vorhergehenden Ansprüche hergestellt ist, wobei das elektrische Verbindungsteil (1, 1', 1") aufweist:
- ein Metallteil (3, 3') als Kontaktelement (18) und
- ein Gehäuse (4, 4') aus Kunststoff, das das Kontaktelement (18) zumindest teilweise umschließt.

7. Elektrisches Verbindungsteil (1, 1', 1") nach Anspruch 6, **dadurch gekennzeichnet, dass** das Kontaktelement (18) eisenhaltig ist oder eine Kupferlegierung mit einer eisenhaltigen Beschichtung aufweist.

8. Elektrisches Verbindungsteil (1, 1', 1") nach Anspruch 6 oder 7, **dadurch gekennzeichnet, dass** das Gehäuse (4, 4') thermoplastischen Kunststoff aufweist, vorzugsweise zu mindestens 50% aus thermoplastischem Kunststoff ist, insbesondere vollständig aus thermoplastischem Kunststoff ist.

9. Elektrisches Verbindungsteil (1, 1', 1") nach einem der Ansprüche 6 bis 8, **dadurch gekennzeichnet, dass** das elektrische Verbindungsteil (1, 1', 1") ein Kabel (2) aufweist, wobei das Kontaktelement (18) als Steckverbinder (5, 5') mit dem Kabel (2) verbunden ist und das Gehäuse (4, 4') die Verbindung zwischen dem Kabel (2) und dem Steckverbinder (5, 5') umschließt, wobei vorzugsweise der Steckverbinder (5, 5') und das Kabel (2) aus dem Gehäuse (4, 4') herausstehen.

10. Elektrisches Verbindungsteil (1, 1', 1") nach Anspruch 9, **dadurch gekennzeichnet, dass** sich das Gehäuse (4, 4') axial längs zumindest teilweise sowohl über den Steckverbinder (5, 5') als auch über das Kabel (2) hinweg erstreckt, vorzugsweise größer gleich 5 mm über den Steckverbinder (5, 5') und größer gleich 5 mm über das Kabel (2).

11. Elektrisches Verbindungsteil (1, 1', 1") nach Anspruch 9 oder 10, **dadurch gekennzeichnet, dass** die Verbindung zwischen dem Kabel (2) und dem Steckverbinder (5, 5') gecrimpt, gelötet oder geschweißt ist.

12. Elektrisches Verbindungsteil (1, 1', 1") nach einem der Ansprüche 6 bis 8, **dadurch gekennzeichnet, dass** das Kontaktelement (18) als Stromschiene (19) aus Metall ausgebildet ist, wobei vorzugsweise die Stromschiene (19) beidseitig aus dem Gehäuse (4, 4') heraussteht.
